# EUROPEAN PATENT SPECIFICATION

(11) **EP 2 529 445 B1**
(45) Date of publication and mention of the grant of the patent: **15.03.2017**
(21) Application number: 10763007.1
(22) Date of filing: 03.09.2010
(51) Int. Cl.: H01M 8/0612, H01M 8/0656, H01M 16/00, H01M 8/06, H01M 8/18, F23C 13/00

(54) **MULTIPURPOSE HYDROGEN GENERATOR SYSTEM**
MEHRZWECK-WASSERSTOFFGENERATORSYSTEM
SYSTÈME GÉNÉRATEUR D'HYDROGÈNE À USAGES MULTIPLES

(30) Priority: 27.01.2010 IT CO20100004
(43) Date of publication of application: 05.12.2012
(73) Proprietor: Giacomini S.p.A., 28017 S. Maurizio d'Opaglio (NO) (IT)
(72) Inventor: GIOCOMINI, Corrado, I-28016 Orta S. Giulio (NO) (IT)
(74) Representative: Di Bernardo, Antonio
(86) International application number: PCT/IB2010/002212
(87) International publication number: WO 2011/092539

(56) References cited:
- WO-A2-02/27814
- DE-U1-202007 017 391
- US-A- 5 924 287
- US-A1- 2007 042 241

## Description

### Field of application

The present invention refers to a multipurpose hydrogen generator system according to the preamble of claim 1.

### Technological background and state of the art

It is known that the industrial production of hydrogen and oxygen occurs in alkaline electrolysers through the process of electrolyses, wherein said electrolysers on the inlet side are respectively connected to a drinkable water supply system, with subsequent treatment in demineraliser devices to transform it into demineralised water, and to an electrical power supply system, through A/C transformer/converter units, while the generated hydrogen and oxygen are separately collected on the outlet side. These are per se simple circuits, whose components may be purchased on the market at various sizes, provided for industrial systems of various performance.

Equally known are fuel cells, which may be supplied with hydrogen and provide electrical energy. Such fuel cells are particularly developed in the automobile industry, for example hybrid diesel/petrol-electric drive vehicles.

Furthermore, recently discovered have been burners with catalytic combustion of hydrogen without forming a flame for household heating systems as an alternative to the traditional gas oil or gas heaters, in particular for residential houses heating systems (i.e. for surfaces up to a about 250/300 m²). Such burners with catalytic combustion of hydrogen with ignition of the reaction at ambient temperature without using a flame, i.e. a reaction entirely below the temperature of formation of NOₓ, with exhaust product solely made up of hot moist air, and with total transfer of heat to the water of the heating system, for example a household heating system of the radiating type, are observable for example from document WO 2005/024301 of the applicant.

Equally known are devices with compressors for the storage of the generated hydrogen in containers under pressure. Also known is the accumulation of hydrogen in metal hydrides, wherein - in the hydrogen storage step - heat is developed and the hydrides require cooling while in the hydrogen transfer step they are heated.

Different degrees of purity of hydrogen are required to supply two different hydrogen powered units, for example said catalytic combustion burners or the fuel cells.

Lastly, known is the market demand for oxygen, for example for technological uses, same case applying to ozone, for sterilization and sanitisation purposes, as well as well as high purity distilled water to be used for example in laboratories.

It is also known that required in many sectors, for example in hospitals, are electricity back-up services, capable of providing uninterruptible power supply in case of interruption of the electrical power from the supply system. Generally used for such services are batteries, which require to be constantly maintained at their state of maximum charge by supplying electrical power from the electrical power supply system and must be subjected to periodic maintenance. This system is clearly costly due to the purchase of batteries, which do not serve any other purpose, and they generally require a corresponding installation surface and, generally, a specific room for installation thereof.

US 5924287 discloses a domestic energy supply system with an electrolyser, a fuel cell to produce electrical energy by electrochemical recombination of the produced hydrogen and oxygen, and an underwater burner for producing heat energy. The fuel cell and the burner are fed in parallel with hydrogen from an hydrogen storage device.

Such a solution, although efficient, does not allow an ease of installation of the system neither allows to optimize the thermal exchanges between the various components that constitute the system.

### Summary of the invention

Thus, the task on which the present invention is based is that of providing a hydrogen generator system capable of supplying various hydrogen powered units and also supplying - alongside hydrogen and oxygen - high purity distilled water, as well as similarly capable of providing services and whose system is also obtainable in a an extremely compact manner.

This task is performed, according to the invention, by means of a multipurpose hydrogen generator system having the characteristics of claim 1.

Further developments and advantageous embodiments are observable from the dependent claims.

The multipurpose hydrogen generator system according to the invention allows obtaining various advantages.

First and foremost, the solution proposed by the invention requires hydrogen alone, which may also be advantageously produced using electrical energy from renewable sources, can be stored and may be transformed into electrical energy and heat energy by means of a system using per se known devices, advantageously dimensioned for the specific use depending on the units, and which simultaneously allow the generation of products such as high purity distilled water, as well as oxygen and/or ozone for technical uses.

Another advantage lies in the fact that the multipurpose hydrogen generator system according to the invention may be assembled in a very compact manner and accommodated preassembled in a casing, which has - externally - only inlet and outlet fittings. Due to its small overall dimensions the unit made up of said casing accommodating the hydrogen generator system may also be installed directly inside or outside residential buildings, hospitals, hotels, in analysis laboratories requiring high purity distilled water for the analysis, and so on and so forth. Such unit may also be used for industrial purposes, such as for example fish farming for constant supply of oxygen to the fish farming ponds or in greenhouses for heating purposes, as well as in other possible fields of application.

Though the electrolysis process advantageously provides for the use of electrical energy from renewable sources and the storage of the generated hydrogen, also falling within the scope of the invention is the use of electrical energy from the power supply system, for example during given hours for example during the night.

Using a heat exchanger providing for an area intended for the condensation of the water vapour advantageously allows using the condensation of the formed water vapour to obtain high purity distilled water.

A further advantage of the multipurpose hydrogen generator system according to the invention lies in providing for a control of the same assisted by a specific software, which is suitable to optimally manage the control of all controllable circuit devices and components, hence obtaining enhanced and inexpensive operating conditions and avoiding erroneous interventions by the user when adjusting the various components of the system.

Providing for an electrical power supply from renewable sources and/or a storage of the generated hydrogen allows guaranteeing an energy reserve (in form of hydrogen) which is obtained during the periods of availability of energy from a renewable source and using it when actually required, even when the energy from a renewable source is not available.

Another advantage lies in the fact that this solution allows simplifying the system in its entirety (devices designed for the specific case, hydraulic, gaseous and electrical connections, adjustments, operational and safety controls) thus avoiding most of the errors during installation and use. The accommodation of the hydrogen generator system in a casing allows a simple, quick and safe installation of the plug and play type and an easy testing and use of the hydrogen generator system still on site.

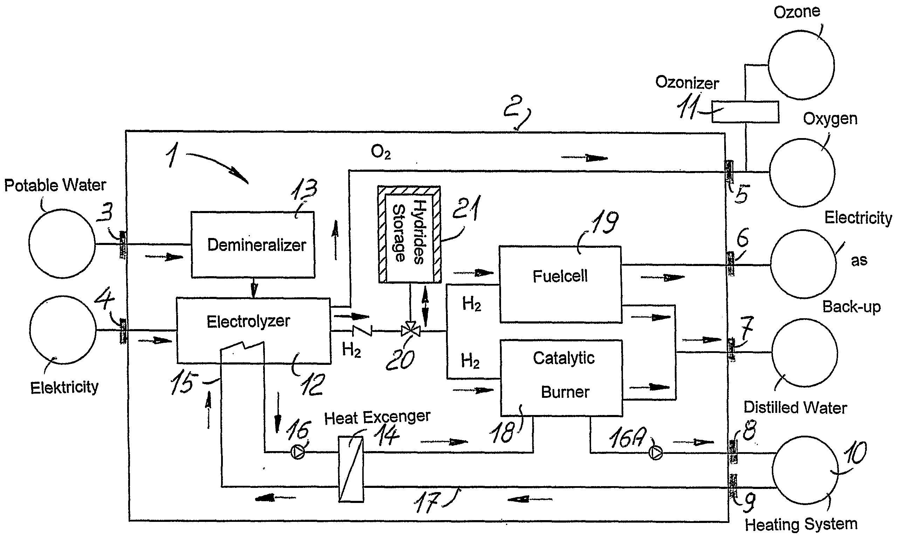

### Brief description of the drawing

Further characteristics, advantages and details of the multipurpose hydrogen generator system according to the invention are observable from the following description of a preferred embodiment illustrated strictly for exemplifying purposes in the attached drawing, to which reference shall be made even for possible details not outlined in-depth in the following description.

The sole figure of the drawing schematically illustrates a circuit arrangement of the various devices or components and the respective connections of the proposed hydrogen generator system, wherein in the illustrated embodiment the entire multipurpose hydrogen generator system is accommodated in a casing containing the same in a compact manner.

### Description of the preferred embodiment

As observable from the drawing, the multipurpose hydrogen generator system indicated in its entirety with 1 is accommodated in a casing 2, which is provided with inlet and outlet fittings, and more precisely with an inlet fitting 3 for connection to the water supply system and an inlet fitting 4 for connection to the power supply system, provided by the electrical power supply system, preferably from a renewable source, for example solar, wind energy, which may be always used when available, i.e. in presence of light or wind.

Provided for as outlet fittings are an outlet fitting 5 for oxygen, a fitting 6 for the output of electrical power as back-up, a fitting 7 for collecting distilled water, a delivery fitting 8 and a fitting 9 of a heating system 10, for example of the heating system of a residential building. Indicated with 11 is an ozonizer derived from the oxygen outlet 5 and serving for the production of ozone. The illustrated multipurpose hydrogen generator system 1 according to the invention is provided for supplying the following services/products:
- thermal energy for heating purposes,
- electrical energy for back-up purposes,
- high purity distilled water,
- oxygen and/or ozone for technical uses.

For example, used in the multipurpose hydrogen generator system 1 according to the invention is the technology for producing hydrogen through water electrolysis in an alkaline electrolyser 12. Supplied to the electrolyser 12 is water from the water supply system preliminarily demineralised in that the water must be free of impurities and ions not required for the electrolysis process, wherein - having considered the use of the generated hydrogen - advantageously provided for is a reverse osmosis demineralisation in a demineraliser 13. Also alternatively used as electrolysers may be PEM electrolysers, i.e. a proton exchange membrane electrolysers. The electrical energy, to be supplied to the electrolyser 12 through an A/C transformer/converter unit, not illustrated, preferably comes from a renewable source, solar or wind energy, and thus useable when available, i.e. in presence of light or wind.

Constantly generated during the electrolysis is heat which, according to a disclosure of the invention, is recovered thus limiting the performance drop of the electric-hydrogen-energetic cycle of the system 1. Used for such purpose is a heat exchanger 14, whose primary circuit 15 is accommodated in the electrolyser 12 and contains a circulation pump 16 while the secondary circuit 17 thereof, likewise containing a circulation pump 16A, is conveyed to the heating system 10 provided for, advantageously after passing through a burner 18, as illustrated. Provided for as a hydrogen catalytic burner 18 to produce thermal energy may be a burner as illustrated in document WO 2005/024301 of the applicant. Such burner is provided for the catalytic combustion of hydrogen with ignition of the reaction at ambient temperature without using a flame, reaction entirely below the temperature of formation of NOₓ, with exhaust product solely made up of hot moist air and heat entirely transferred to the heating water of a heating system, for example of the radiant type.

It should be observed that the indicated heating system, integrated with the thermal solar system, forms an ideal combination for the low temperature radiant heating, integrated by the solar thermal source.

As observable from the drawing, connected parallel to the burner 18 is a fuel cell 19, wherein said parallel connection of the burner 18 and fuel cell 19 is connected, through a multiple-way valve 20 both with hydrogen outlet of the electrolyser 12 and outlet 21 for the hydrogen storage device represented by a tank under pressure or using metal hydrides, the hydrogen storage device 21 being fundamental for providing an energy carrier, i.e. a hydrogen carrier, upon demand by the fuel cell 19 and/or the burner 18 as an alternative to the supply of hydrogen directly by the electrolyser 12. Storage with metal hydrides would be preferable for space and safety reasons.

The electrical energy which may be provided by the fuel cell 19, which may be supplied at any time in a safe manner through the storage of hydrogen, represents a reliable electric back-up independent from external power supply and not requiring preliminary electrical storage devices, such as electric storage batteries.

The circuit connections between the various components or devices of the system 1 are observable from the drawing, on which the direction of movement of the fluids is indicated by arrows.

Furthermore, the drawing also shows that - alongside providing consistent services for the production of thermal energy and electrical energy starting from hydrogen - also obtainable are various products represented by oxygen, coming from the electrolysis process, as well as ozone, obtained from the oxygen generated through the ozonation step 11, as well as rich high purity distilled water obtained from the recovery of condensates of the water vapour as illustrated above.

The multipurpose hydrogen generator system 1 according to the invention and accommodated in a casing 2, as illustrated, may advantageously represent an efficient energy platform and also useable in case of emergency, which solely requires water from the water supply system (or from a cistern in case of emergency events, such as earthquakes and the like) and electrical energy which may be supplied, in case of emergency, either from the supply system or from generator units.

The plurality of services and products that may be provided by the hydrogen generator system 1 according to the invention, useable singularly or combined depending on the needs, may be used in various sectors, for example:
- In all areas wherein it is important to ensure both electrical and thermal back up. The most instant application is the provision of zero-emission heating systems for residential use, by combining an amount of thermal solar energy with that of catalytic combustion, whose source is entirely renewable and providing the structure of a an electrical back-up system.
- In hospital facilities wherein alongside guaranteeing energy it is also possible to provide, by production in loco, therapeutic oxygen to be integrated in the system for distribution to the wards.
- In hotel and wellness facilities wherein oxygen therapy is required.
In addition:
- As the use of oxygen in fish farming through constant supply of oxygen to the fish farming ponds.
- As creation of ozone from oxygen for water sterilisation and sanitisation treatments.
- In laboratory analyses which require high purity distilled water for the analysis.
- As production of heat used for heating, for example, industrial sheds, gyms, greenhouses and so on and so forth.

From the structural and functional description of the multipurpose hydrogen generator system outlined above according to the invention it is observable that the same efficiently allows executing the indicated task and the aforementioned advantages are attained.

In practice, those skilled in the art may introduce various modifications and variants, such as for example providing for a demineralised water tank arranged between the demineraliser and the electrolyser, and so on and so forth, without departing from the scope of protection of the present invention, as described above and claimed in the attached claims.

## Claims

1. Multipurpose hydrogen generator system, comprising an electrolyser for executing a water electrolysis process and associated devices for operation thereof to produce hydrogen and oxygen,
**characterised in that** it further comprises, functionally interconnected to each other:
- a device (14) for recovering the heat generated by the electrolysis and cooling of the electrolyser (12),
- a device (21) for storing the generated hydrogen,
- a burner (18) for generating heat, and
- a fuel cell (19) for producing electrical energy,
wherein said burner (18) and said fuel cell (19) are connected in parallel and wherein said parallel connection is connected through a multiple-way valve (20) both with hydrogen outlet of the electrolyser (12) and outlet (21) of the hydrogen storage device and wherein said burner (18) and said fuel cell (19) are suppliable with the hydrogen produced directly by the electrolyser (12) and/or with the hydrogen drawn from said storage device (21),
- as well as respective circuit and control and adjustment components, and
**in that** the entire hydrogen generator system (1) is accommodated in a casing (2), which has - externally - a plurality of inlet connection fittings (3, 4) for the water and electrical power supply system for supplying the electrolyser (12) and outlet connection fittings (5, 6, 7, 8, 9) for the various services and products supplied.

2. Hydrogen generator system according to claim 1, **characterised in that** the electrical energy is supplied from renewable sources, possibly integrated by electrical power supply available at privileged periods of time, for example at night.

3. Hydrogen generator according to claim 1, **characterised in that** the hydrogen storage device (21) is provided for as a tank under pressure or contains metal hydrides and forms an associated storage tank.

4. Hydrogen generator according to claim 1, **characterised in that** the demineralizer (13) is reverse osmosis demineralizer.

5. Hydrogen generator system according to claim 1, **characterised in that** the heat recovery device (14) comprises a heat exchanger (14), whose primary circuit (15) is associated to the electrolyser (12) and whose secondary circuit (17) is connected to a heat user, for example a household or industrial heating system (10).

6. Hydrogen generator system one or more of the preceding claims, **characterised in that** the burner (18) for producing heat is for example a catalytic combustion burner for hydrogen with the ignition of the reaction at ambient temperature, without using a flame, with reaction entirely below the temperature of formation of NOₓ and discharge solely made up of moist hot air, and with the heat entirely transferred to the water for heating said heating system (10).

7. Hydrogen generator system according to claim 1, **characterised in that** the electrical energy generated by the fuel cell (19) is obtained for providing an electrical back-up service for the structures associated thereto, such as hospitals and so on and so forth.

8. Hydrogen generator system one or more of the preceding claims, **characterised in that** the heating system (10) is a heating system for houses, preferably of the radiating type, integrated with a solar heat system.

9. Hydrogen generator system according to one or more of the preceding claims, **characterised in that** high-purity distilled water is obtained from the recovery of the condensate of the water vapour from the burner (18).

10. Hydrogen generator system according to one or more of the preceding claims, **characterised in that** it forms - with said accommodation casing (2) - a ready preassembled unit for installation thereof for connection, on the inlet side, to the water and power supply systems and, on the outlet side, to the heating services (10) and electrical back-up units and to the points for collecting the products provided for, for example oxygen, ozone and high-purity distilled water.

11. Hydrogen generator system according to one or more of the preceding claims, **characterised in that** it comprises a control device supported by a programmable software, which is suitable to manage in the most suitable manner all controllable circuit devices and components.

## Patentansprüche

1. Mehrzweck-Wasserstofferzeugersystem, umfassend einen Elektrolyseur zum Ausführen eines Wasserelektrolyseprozesses und zugehörige Vorrichtungen zu dessen Betrieb zum Erzeugen von Wasserstoff und Sauerstoff,
**dadurch gekennzeichnet, dass** es, funktionell miteinander verbunden, ferner folgendes umfasst:
- eine Vorrichtung (14) zum Wiedergewinnen der Wärme, die durch die Elektrolyse erzeugt wird, und Kühlen des Elektrolyseurs (12),
- eine Vorrichtung (21) zum Speichern des erzeugten Wasserstoffs,
- einen Brenner (18) zum Erzeugen von Wärme, und
- eine Brennstoffzelle (19) zum Erzeugen von elektrischer Energie,
wobei der Brenner (18) und die Brennstoffzelle (19) parallel miteinander verbunden sind, und wobei die parallele Verbindung über ein Mehrwegventil (20) sowohl mit einem Wasserstoffauslass des Elektrolyseurs (12) als auch einem Auslass (21) der Wasserstoffspeichervorrichtung verbunden ist, und wobei der Brenner (18) und die Brennstoffzelle (19) mit dem Wasserstoff, der direkt durch den Elektrolyseur (12) erzeugt wird, oder mit dem Wasserstoff, der aus der Speichervorrichtung (21) abgezogen wird, beschickbar sind,
- sowie jeweilige Kreis- und Steuer- und Einstellungskomponenten, und
dadurch, dass das gesamte Wasserstofferzeugersystem (1) in einem Gehäuse (2) untergebracht ist, das - extern - mehrere Einlassverbindungsarmaturen (3, 4) für das Versorgungssystem für Wasser und elektrische Energie zum Versorgen des Elektrolyseurs (12) und Auslassverbindungsarmaturen (5, 6, 7, 8, 9) für die verschiedenen zugeführten Versorgungen und Erzeugnisse aufweist.

2. Wasserstofferzeugersystem nach Anspruch 1, **dadurch gekennzeichnet, dass** die elektrische Energie aus erneuerbaren Energiequellen zugeführt wird, möglicherweise eingebunden mit elektrischer Stromversorgung in begünstigten Zeiträumen, beispielsweise nachts.

3. Wasserstofferzeuger nach Anspruch 1, **dadurch gekennzeichnet, dass** die Wasserstoffspeichervorrichtung (21) als ein druckbeaufschlagter Tank vorgesehen ist oder Metallhydride enthält und einen zugehörigen Speichertank ausbildet.

4. Wasserstofferzeuger nach Anspruch 1, **dadurch gekennzeichnet, dass** der Entsalzer (13) ein Umkehrosmoseentsalzer ist.

5. Wasserstofferzeugersystem nach Anspruch 1, **dadurch gekennzeichnet, dass** die Wärmerückgewinnungsvorrichtung (14) einen Wärmetauscher (14) umfasst, dessen erster Kreis (15) dem Elektrolyseur (12) zugeordnet ist und dessen zweiter Kreis (17) einem Wärmenutzer zugeordnet ist, beispielsweise einem Haushalts- oder Industrieheizsystem.

6. Wasserstofferzeugersystem nach einem oder mehreren der vorhergehenden Ansprüche, **dadurch gekennzeichnet, dass** der Brenner (18) zum Erzeugen von Wärme beispielsweise ein Brenner zur katalytischen Verbrennung für Wasserstoff ist, mit Zündung der Reaktion auf Umgebungstemperatur, ohne Flammennutzung, mit Reaktion gänzlich unterhalb der Entstehungstemperatur von NOₓ und lediglich aus feuchter Heißluft gebildetem Ausstoß, und wobei die Wärme gänzlich zum Wasser zum Erwärmen des Heizsystems (10) überführt wird.

7. Wasserstofferzeugersystem nach Anspruch 1, **dadurch gekennzeichnet, dass** die elektrische Energie, die durch die Brennstoffzelle (19) erzeugt ist, zum Versorgen eines elektrischen Back-Up-Dienstes für die damit zusammenhängenden Strukturen, wie etwa Krankenhäuser usw., erhalten wird.

8. Wasserstofferzeugersystem nach einem oder mehreren der vorhergehenden Ansprüche, **dadurch gekennzeichnet, dass** das Heizsystem (10) ein Heizsystem für Häuser, vorzugsweise der Abstrahlungsart, eingebunden mit einem Solarheizsystem ist.

9. Wasserstofferzeugersystem nach einem oder mehreren der vorhergehenden Ansprüche, **dadurch gekennzeichnet, dass** das hochreine destillierte Wasser aus der Rückgewinnung des Kondensats des Wasserdampfs vom Brenner (18) erhalten wird.

10. Wasserstofferzeugersystem nach einem oder mehreren der vorhergehenden Ansprüche, **dadurch gekennzeichnet, dass** es - zusammen mit dem Unterbringungsgehäuse (2) - eine zu ihrer Einrichtung fertige, vormontierte Einheit ausbildet, zur Verbindung auf der Einlassseite mit den Wasser- und Stromversorgungssystemen und auf der Auslassseite mit den Heizversorgungen (10) und elektrischen Back-Up-Einheiten und mit den Punkten zum Sammeln der vorgesehenen Erzeugnisse, beispielsweise Sauerstoff, Ozon und hochreines destilliertes Wasser.

11. Wasserstofferzeugersystem nach einem oder mehreren der vorhergehenden Ansprüche, **dadurch gekennzeichnet, dass** es eine durch eine programmierbare Software unterstützte Steuervorrichtung umfasst, die zum Verwalten aller steuerbaren Kreisvorrichtungen und Komponenten auf zweckmäßigste Art und Weise geeignet ist.

## Revendications

1. Système générateur d'hydrogène à usages multiples, comprenant un électrolyseur pour exécuter un processus d'électrolyse de l'eau et des dispositifs associés pour le fonctionnement de celui-ci pour produire de l'hydrogène et de l'oxygène,
**caractérisé par le fait qu'**il comprend en outre, reliés l'un à l'autre de façon fonctionnelle :
- un dispositif (14) pour récupérer la chaleur générée par l'électrolyse et refroidir l'électrolyseur (12),
- un dispositif (21) pour stocker l'hydrogène généré,
- un brûleur (18) pour générer de la chaleur, et
- une pile à combustible (19) pour produire de l'énergie électrique,
ledit brûleur (18) et ladite pile à combustible (19) étant reliés en parallèle et ledit raccordement parallèle étant relié par l'intermédiaire d'une soupape à voies multiples (20) à la fois à une sortie d'hydrogène de l'électrolyseur (12) et à une sortie (21) du dispositif de stockage d'hydrogène, et ledit brûleur (18) et ladite pile à combustible (19) étant aptes à être alimentés en hydrogène produit directement par l'électrolyseur (12) et/ou en hydrogène aspiré à partir dudit dispositif de stockage (21),
- ainsi que des composants de circuit et de commande et d'ajustement respectifs, et
**par le fait que** la totalité du système de générateur d'hydrogène (1) est logé dans un boîtier (2), qui comporte - extérieurement - une pluralité de raccords de liaison d'entrée (3, 4) pour le système d'alimentation en énergie électrique et en eau pour alimenter l'électrolyseur (12) et des raccords de liaison de sortie (5, 6, 7, 8, 9) pour les divers services et produits fournis.

2. Système générateur d'hydrogène selon la revendication 1, **caractérisé par le fait que** l'énergie électrique est fournie par des sources renouvelables, éventuellement intégrées par une alimentation électrique disponible à des périodes de temps privilégiées, par exemple la nuit.

3. Système générateur d'hydrogène selon la revendication 1, **caractérisé par le fait que** le dispositif de stockage d'hydrogène (21) est prévu en tant que réservoir sous pression ou contient des hydrures métalliques et forme un réservoir de stockage associé.

4. Système générateur d'hydrogène selon la revendication 1, **caractérisé par le fait que** le déminéralisateur (13) est un déminéralisateur à osmose inverse.

5. Système générateur d'hydrogène selon la revendication 1, **caractérisé par le fait que** le dispositif de récupération de chaleur (14) comprend un échangeur de chaleur (14), dont le circuit principal (15) est associé à l'électrolyseur (12) et dont le circuit secondaire (17) est relié à un utilisateur de chaleur, par exemple un système de chauffage domestique ou industriel (10).

6. Système générateur d'hydrogène selon une ou plusieurs des revendications précédentes, **caractérisé par le fait que** le brûleur (18) pour produire de la chaleur est, par exemple, un brûleur à combustion catalytique pour hydrogène avec l'allumage de la réaction à température ambiante, sans utiliser de flamme, avec une réaction entièrement inférieure à la température de formation de NOₓ et une décharge uniquement constituée d'air chaud humide, et avec la chaleur entièrement transférée à l'eau pour chauffer ledit système de chauffage (10).

7. Système générateur d'hydrogène selon la revendication 1, **caractérisé par le fait que** l'énergie électrique générée par la pile à combustible (19) est obtenue pour fournir un service de secours électrique aux structures associées à celle-ci, telles que des hôpitaux, etc.

8. Système générateur d'hydrogène selon une ou plusieurs des revendications précédentes, **caractérisé par le fait que** le système de chauffage (10) est un système de chauffage pour maisons, de préférence du type rayonnant, intégré à un système de chaleur solaire.

9. Système générateur d'hydrogène selon une ou plusieurs des revendications précédentes, **caractérisé par le fait que** de l'eau distillée à haute pureté est obtenue à partir de la récupération du condensat de la vapeur d'eau provenant du brûleur (18).

10. Système générateur d'hydrogène selon une ou plusieurs des revendications précédentes, **caractérisé par le fait qu'**il forme - avec ledit boîtier de logement (2) - une unité préassemblée prête pour l'installation de celui-ci en vue d'un raccordement, sur le côté d'entrée, aux systèmes d'alimentation en énergie et en eau et, sur le côté de sortie, aux services de chauffage (10) et unités de secours électriques et aux points de collecte de produits fournis, par exemple l'oxygène, l'ozone et l'eau distillée à haute pureté.

11. Système générateur d'hydrogène selon une ou plusieurs des revendications précédentes, **caractérisé par le fait qu'**il comprend un dispositif de commande pris en charge par un logiciel programmable, qui est approprié pour gérer dans la plupart des cas tous les composants et dispositifs de circuit commandables.
